(19) Europäisches Patentamt / European Patent Office / Office européen des brevets

(11) **EP 3 598 123 B1**

(12) **EUROPEAN PATENT SPECIFICATION**

(45) Date of publication and mention
of the grant of the patent:
**04.10.2023 Bulletin 2023/40**

(21) Application number: **19174385.5**

(22) Date of filing: **14.05.2019**

(51) International Patent Classification (IPC):
**G01N 29/44** *(2006.01)*

(52) Cooperative Patent Classification (CPC):
**G01N 29/043; B29C 70/545; G01N 21/86;
G01N 21/892; G01N 29/275; G01N 29/4472;**
G01N 27/90; G01N 2021/8472; G01N 2291/0231;
G01N 2291/044; Y02P 80/40

(54) **COMPOSITE MANUFACTURING SYSTEM AND METHOD**

SYSTEM UND VERFAHREN ZUR VERBUNDWERKSTOFFFERTIGUNG

SYSTÈME ET PROCÉDÉ DE FABRICATION DE MATÉRIAUX COMPOSITES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.07.2018 US 201816041264**

(43) Date of publication of application:
**22.01.2020 Bulletin 2020/04**

(73) Proprietor: **Aurora Flight Sciences Corporation
Manassas, VA 20110 (US)**

(72) Inventors:
• **Fetfatsidis, Konstantine A.
Manassas, VA 20110 (US)**
• **Bosworth, William Robert
Manassas, VA 20110 (US)**
• **Needham, Thomas Richard
Manassas, VA 20110 (US)**

(74) Representative: **Witte, Weller & Partner
Patentanwälte mbB
Postfach 10 54 62
70047 Stuttgart (DE)**

(56) References cited:
**US-A- 4 725 961     US-B1- 6 520 057
US-B2- 8 583 271**

• **David K Hsu: "NONDESTRUCTIVE INSPECTION
OF COMPOSITE STRUCTURES: METHODS AND
PRACTICE", 17th World Conference on
NonDestructive Testing, 25 October 2008
(2008-10-25), pages 1-14, XP055299690,
Shanghai, China Retrieved from the Internet:
URL:http://www.ndt.net/article/wcndt2008/p
apers/612.pdf [retrieved on 2016-09-02]**

## Description

## TECHNICAL FIELD

The present disclosure is directed to composite structures; more particularly, to systems and methods for manufacturing composite structures.

## BACKGROUND

Composite structures are widely used in aircraft fabrication because they are generally lighter, more durable, and longer lasting when compared to aircraft structures fabricated from traditional aircraft materials (*e.g.*, aluminum, aluminum alloys, etc.). Indeed, weight reduction is major advantage of composite material usage and is a key factor in using it in an aircraft structure. For example, fiber-reinforced matrix systems are stronger than traditional aluminum found on most aircraft, while also providing smooth surfaces and increased fuel efficiency due to its lighter weight. Fiberglass, for example, is a common composite material used in composite structures for aircraft applications. In addition to weight saving benefits, composite materials provide more corrosion resistance than other materials. Further, composite structures do not crack from metal fatigue and tend to provide stability in structural flexing environments. Finally, composite materials are particularly useful when fabricating complex 3-dimensional ("3D") structures, which typically offer a favorable strength-to-weight ratio compared to conventional metal or plastics manufacturing. Accordingly, in addition to lower weight, composite structures result in reduced maintenance and repair costs, while also enabling the fabrication of complex shapes.

Composite manufacturing, however, is generally more expensive compared to many conventional metal manufacturing methods. This added cost can be attributed, at least in part, to the relatively complex and time-consuming manufacturing process, which historically required multiple steps. Notably, the manufacturing process includes a curing process during which the structure may spend hours or days in a controlled environment to achieve its required strength. Final inspection of the composite structure is used to verify structural and geometric integrity of the part. While analyzing the composite structure before use is very important, identification of flaws during final inspection results in a considerable loss of productivity and revenue.

Therefore, a need exists for improved manufacturing systems and methods. To that end, the subject disclosure addresses the inspection of composite materials used in composite manufacturing. For example, during a first step in the manufacturing process, the composite material may be analyzed to identify defects in the composite material prior to assembly and cure of the composite structure. These defects may be detected immediately, or may also be used in a tracking system to investigate the sources of defects found in later inspection steps.

US 8 583 271 B2, according to its abstract, states that an apparatus may comprise a nondestructive evaluation system and a cutting system. The nondestructive evaluation system may be configured to inspect a processed portion of a structure. The nondestructive evaluation system may be configured to determine whether an inconsistency is present in the processed portion. The nondestructive evaluation system may also be configured to generate information about a location of the inconsistency. The cutting system may be configured to cut a number of parts out of the processed portion of the structure in which the inconsistency may be at least substantially excluded from the number of parts.

US 4 725 961 A, according to its abstract, states that in an apparatus and method for use in cutting pattern parts from a plurality of irregularly shaped and sized pieces of sheet material, such as hides, a piece of sheet material to be cut is spread onto the cylindrical surface of a drum and is then first digitized and subsequently cut while remaining fixed to the drum. From the data obtained by the digitizing a representation of the hide periphery is visually displayed on the screen of a layout unit where an operator interactively arranges visual part representations selected from a computer memory store within the hide periphery representation to arrive at an acceptable layout of parts. Such layout is then converted to digital data used to cause the sheet material to be cut in accordance with the layout during the cutting step.

US 6 520 057 B1, according to its abstract, states a system and method for performing operations such as cutting on sheet material such as cloth wherein the sheet material is scanned at an inspection station to determine the existence and location of flaws in the material, the material is transferred to a conveyor where operations such as cutting are performed on the sheet material as it is moved by the conveyor, and the speed of the conveyor and the speed, direction and mode of the operations are controlled all according to a predetermined pattern of operation for the sheet material and the pattern can be re-nested or adjusted in accordance with the existence and location of flaws in the material as determined by the scanning. The operations are performed by controlled gantry-style cutters, and preferably two such cutters are employed wherein a control determines the conveyor speed and determines the portions of the cutting operation to be performed by the respective cutters.

## BRIEF SUMMARY OF THE INVENTION

There is provided a material inspection system for planning a cutting pattern for a composite material sheet based on a detected defect, the material inspection system comprising: one or more sensors to measure one or more material properties of the composite material sheet; a cutter assembly having a cutter tool to cut the composite material sheet; a control system comprising a hardware processor and a non-transitory storage medium comprising instructions, that when executed by the hardware processor, configured to: obtain an initial cutting pattern for the composite material sheet, wherein the initial cutting pattern comprises one or more shapes to be cut; determine a defect in the composite material sheet based on the measured one or more material properties of the composite material sheet; determine a reject region in the composite material sheet around the defect; shift one or more shapes of the one or more shapes away from the reject region; and provide a revised cutting pattern based on the one or more shapes that are shifted to be cut by the cutter assembly; wherein the control system is configured to determine the defect such that the reject region encompasses the defect but does not extend to a full width of the composite material sheet, and wherein the control system is configured to shift the one or more shapes such that the one or more shapes that are shifted are reoriented to maximize usage of the composite material sheet in the revised cutting pattern while avoiding the defect.

There is further provided a computer-implemented method for material inspections, the computer-implemented method comprising: obtaining an initial cutting pattern for a composite material sheet, wherein the initial cutting pattern comprises one or more shapes to be cut; determining a defect in the composite material sheet based on the measured one or more material properties of the composite material sheet; determining, by a hardware processor, a reject region in the composite material sheet around the defect; shifting one or more shapes of the one or more shapes away from the reject region; and providing a revised cutting pattern based on the shifting; wherein the reject region encompasses the defect but does not extend to a full width of the composite material sheet; and wherein the one or more shapes that are shifted are reoriented to maximize usage of the composite material sheet in the revised cutting pattern while avoiding the defect.

## BRIEF DESCRIPTION OF THE FIGURES

These and other advantages of the present disclosure will be readily understood with the reference to the following specifications and attached drawings wherein:

FIG. 1 illustrates an example automated two-dimensional ply cutting machine configured to cut a composite material sheet.

FIG. 2A and 2B illustrate a cutting machine configured with a material-inspection system.

FIG. 2C illustrates a first example material-inspection system.

FIG. 3 illustrates a block diagram schematic of an example material-inspection system.

FIG. 4 illustrates a method for planning a cutting operation based on a scan of a pre-preg material, according to examples of present disclosure.

FIG. 5 illustrates an initial template for pre-planned cuts prior to scanning, according to examples of the present disclosure.

FIG. 6 illustrates the initial template of FIG. 5 with the results of the scanning, according to examples of the present disclosure.

FIG. 7 illustrates the initial template of FIG. 5 with boundaries of a reject rejection determined, according to examples of the present disclosure.

FIG. 8 illustrates a first revised template based on the determined boundaries of FIG. 7.

FIG. 9 illustrates a second revised template based on a minimized boundary around the reject region, according to examples of the present disclosure.

## DETAILED DESCRIPTION OF THE INVENTION

Preferred embodiments of the present disclosure will be described hereinbelow with reference to the accompanying drawings. In the following description, certain well-known functions or constructions are not described in detail since they would obscure the disclosure in unnecessary detail. The figures are not necessarily to scale, emphasis instead being placed upon illustrating the principles of the devices, systems, and methods described herein. For this application, the following terms and definitions shall apply:
The terms "about" and "approximately," when used to modify or describe a value (or range of values), mean reasonably close to that value or range of values. Thus, the embodiments described herein are not limited to only the recited values and ranges of values, but rather should include reasonable workable deviations.

The terms "aerial vehicle" and "aircraft" refer to a machine capable of flight, including, but not limited to, traditional aircraft and vertical takeoff and landing (VTOL) aircraft. VTOL aircraft may include both fixed-wing aircraft, rotorcraft (e.g., helicopters), and/or tilt-rotor/tilt-wing aircraft.

The terms "circuits" and "circuitry" refer to physical electronic components (e.g., hardware) and any software and/or firmware ("code") which may configure the hardware, be executed by the hardware, and or otherwise be associated with the hardware. As used herein, for example, a particular processor and memory may comprise a first "circuit" when executing a first set of one or more lines of code and may comprise a second "circuit" when executing a second set of one or more lines of code. As utilized herein, circuitry is "operable" to perform a function whenever the circuitry comprises the necessary hardware and code (if any is necessary) to perform the function, regardless of whether performance of the function is disabled, or not enabled (e.g., by a user-configurable setting, factory trim, etc.).

The terms "communicate" and "communicating" as used herein, include both conveying data from a source to a destination and delivering data to a communications medium, system, channel, network, device, wire, cable, fiber, circuit, and/or link to be conveyed to a destination. The term "communication" as used herein means data so conveyed or delivered. The term "communications" as used herein includes one or more of a communications medium, system, channel, network, device, wire, cable, fiber, circuit, and/or link.

The term "composite material" as used herein, refers to a material comprising an additive material and a matrix material. For example, a composite material may comprise a fibrous additive material (e.g., fiberglass, glass fiber ("GF"), carbon fiber ("CF"), aramid/para-aramid synthetic fibers, etc.) and a matrix material (e.g., epoxies, polyimides, and alumina, including, without limitation, thermoplastic, polyester resin, polycarbonate thermoplastic, casting resin, polymer resin, acrylic, chemical resin). In certain aspects, the composite material may employ a metal, such as aluminum and titanium, to produce fiber metal laminate (FML) and glass laminate aluminum reinforced epoxy (GLARE). Further, composite materials may include hybrid composite materials, which are achieved via the addition of some complementary materials (*e.g.,* two or more fiber materials) to the basic fiber/epoxy matrix.

The term "composite laminates" as used herein, refers to a type of composite material assembled from layers (*i.e.,* a "ply") of additive material and a matrix material.

The term "composite structure" as used herein, refers to structures or components fabricated, at least in part, using a composite material, including, without limitation, composite laminates.

The terms "coupled," "coupled to," and "coupled with" as used herein, each mean a relationship between or among two or more devices, apparatuses, files, circuits, elements, functions, operations, processes, programs, media, components, networks, systems, subsystems, and/or means, constituting any one or more of (i) a connection, whether direct or through one or more other devices, apparatuses, files, circuits, elements, functions, operations, processes, programs, media, components, networks, systems, subsystems, or means; (ii) a communications relationship, whether direct or through one or more other devices, apparatuses, files, circuits, elements, functions, operations, processes, programs, media, components, networks, systems, subsystems, or means; and/or (iii) a functional relationship in which the operation of any one or more devices, apparatuses, files, circuits, elements, functions, operations, processes, programs, media, components, networks, systems, subsystems, or means depends, in whole or in part, on the operation of any one or more others thereof.

The term "data" as used herein means any indicia, signals, marks, symbols, domains, symbol sets, representations, and any other physical form or forms representing information, whether permanent or temporary, whether visible, audible, acoustic, electric, magnetic, electromagnetic, or otherwise manifested. The term "data" is used to represent predetermined information in one physical form, encompassing any and all representations of corresponding information in a different physical form or forms.

The term "database" as used herein means an organized body of related data, regardless of the manner in which the data or the organized body thereof is represented. For example, the organized body of related data may be in the form of one or more of a table, map, grid, packet, datagram, frame, file, email, message, document, report, list, or in any other form.

The term "exemplary" means "serving as an example, instance, or illustration." The embodiments described herein are not limiting, but rather are exemplary only. It should be understood that the described embodiments are not necessarily to be construed as preferred or advantageous over other embodiments. Moreover, the terms "embodiments of the invention," "embodiments," or "invention" do not require that all embodiments of the invention include the discussed feature, advantage, or mode of operation.

The term "memory device" means computer hardware or circuitry to store information for use by a processor. The memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like.

The term "network" as used herein includes both networks and inter-networks of all kinds, including the Internet, and is not limited to any particular network or inter-network.

The term "processor" means processing devices, apparatuses, programs, circuits, components, systems, and subsystems, whether implemented in hardware, tangibly embodied software, or both, and whether or not it is programmable. The term "processor" includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC). The processor may be coupled to, or integrated with, a memory device.

Composite structures, such as those used in aircraft structures, can be fabricated using sheets of composite material, also known as layers or plies. Multiple composite material sheets may be assembled to form a composite laminate or other composite structure. In certain aspects, the composite material sheet may comprise both an additive material and a matrix material. More specifically, the composite material sheet may comprise composite fibers where a bonding material, such as resin or epoxy, is already present in the composite fibers; an arrangement that is more commonly known as "pre-impregnated" composite fibers or "pre-preg," for short. A pre-preg material is initially flexible and somewhat sticky, but becomes hard and stiff once it has been subjected to an autoclave curing process that combines both heat and pressure. Composite material sheets may be delivered as a roll using a spool. In use, the composite material sheet may be unrolled from the spool and cut to achieve a desired size and shape. Suitable composite materials for aerial vehicles, include, without limitation, 977-3 resin and IM7/977-3 pre-preg available from Cytec Industries, which is a toughened epoxy resin with 350° Fahrenheit (F) (177°C) dry and 270°F (132°C) wet service capability.

Before a composite structure is used, it is typically inspected to verify its structural and geometric integrity. Often, a defect in the composite structure can be attributed, or otherwise linked, to a defect in the composite material sheet. At this stage in the manufacturing process, however, a substantial amount of time, effort, and cost may have been expended to fabricate and cure the composite structure. Accordingly, to reduce waste of valuable manufacturing resources, it would be advantageous to perform material-inspection during (or immediately prior to) a first cutting step to thereby avoid cutting and employing defective composite material to fabricate a composite structure. To that end, the subject disclosure provides a system and method to facilitate the inspection of composite material (e.g., composite material sheets) during the manufacturing process of composite structures. More specifically, the disclosure describes a material-inspection system and a two-dimensional ply-cutting machine having a material-inspection system to analyze the structural integrity of the composite material during the initial steps of the manufacturing process (e.g., as the composite material sheet is unrolled from the spool).

The disclosed material-inspection system facilitates a number of unique capabilities. First, placement of a material-inspection system directly on the cutting machine/process saves both space and time. Second, integration of the material-inspection system with the cutting machine avoids cutting in portions of defective composite material and can re-cut parts that overlap with defective areas. Finally, inspection data gathered by the material-inspection system from individual parts (e.g., composite material cut to a predetermined shaped) can be tracked through the life of the parts to generate a database of historic material qualities. This tracked historic data can aid in future debugging activities. For example, the historic data may be referenced by the material-inspection system (or another system) to identify as-yet-unknown relationships between material properties at the beginning of manufacturing to the final performance of the parts.

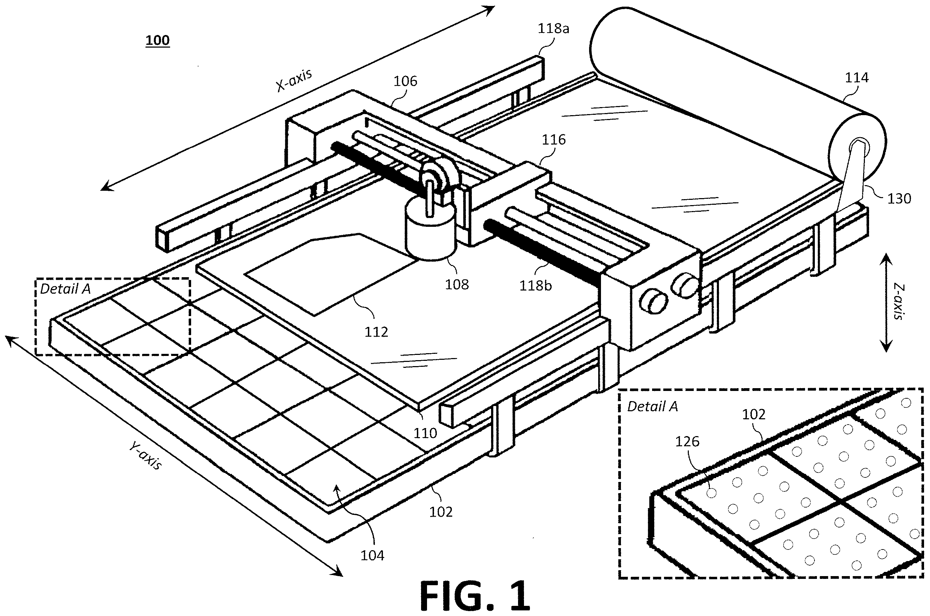

FIG. 1 illustrates an example automated two-dimensional ply cutting machine 100 configured to cut a composite material sheet 110 into individual parts/pieces for composite structure manufacturing. The cutting machine 100 is typically used during the first step of manufacturing composite assemblies (e.g., composite structures). As illustrated, the cutting machine 100 generally comprises a moveable cutter assembly 108 and a base structure 102 having a planar surface that defines a working area 104 (e.g., a working bed). The composite material sheet 110 may be unrolled from a material spool 114 mounted to a support rack 130 at one end (e.g., the back end) of the automated ply cutter's 100 base structure 102 in order to facilitate laying the materials onto the table of the cutting machine 100. For example, a technician may pull the composite material sheet 110 from the material spool 114 and lay it upon the working area 104 for cutting. The material spool 114 may be a roll of pre-preg material that may have defects.

The base structure 102 may be sized to provide a working area 104 of virtually any size, which may be dictated by the composite structure to be fabricated of the size of the material spool 114 (e.g., its width). In one aspect, the working area 104 may be, for example, 1.83 m (6 feet) wide by 4.57 m (15 feet) long; although other sizes and aspect ratios are contemplated. The base structure 102 may further comprise a vacuum system 128 that gently pulls the composite material sheet 110 toward the working area 104 (e.g., into the table via suction force) during the cutting process. Accordingly, the soft vacuum system 128 causes the composite material sheet 110 to lie flat (e.g., substantially devoid of wrinkles/air pockets between the composite material sheet 110 and surface of the working area 104), while also mitigating movement of the composite material sheet 110 during the cutting process. To that end, the working area 104 may be provided with a plurality of vacuum holes 126 distributed across its surface through which air can be drawn, via a vacuum system 128, into the base structure 102.

In operation, the cutter assembly 108 is used to form a cut 112 in the composite material sheet 110 to define a part of a desired (e.g., predetermined) shape. The cutter assembly 108 generally comprises a cutter tool (e.g., a rotary or reciprocating cutter tool or blade) to cut the composite material sheet 110. The cutter tool may be driven by an electric drive motor. For example, the cutter tool may be coupled to the drive motor via the spindle and/or a quill (*e.g.*, an extendable part of the spindle). The cutter tool may be removably coupled to the spindle using, for example, a chuck and chuck key. The spindle may be configured to couple with various cutter tools of different types and sizes. For example, the spindle may accept cutter tool bits with a 3.8 cm (⅛ inch) shank, but can be adjusted to accommodate shanks of other sizes (*e.g.*, 5.7 cm ($^3/16$ inch), 7.6 cm (¼ inch), 15.2 cm (½ inch), etc.) using, *inter alia*, an adjustable spindle and/or an adapter.

The cutter assembly 108 is configured to move relative to the working area 104 via a gantry (e.g., a two-axis gantry, such as an X-Y gantry). The X-Y gantry generally comprises a first carriage 106, a second carriage 116 (*e.g.*, a shuttle), a first set of rails 118a, and a second set of rails 118b. The first carriage 106 may be used to control movement of the cutter assembly 108 relative to the working area 104 along the X-axis, while the second carriage 116 may be used to control movement of the cutter assembly 108 relative to the working area 104 along the Y-axis. As illustrated, to provide movement along the X and Y axis, the first carriage 106 may be slideably coupled to the base structure 102 via a first pair of rails 118a (illustrated as parallel to the X-axis/longitudinal axis of the base structure 102), while the second carriage 116 may be configured to translate along the Y-axis along a second set of rails 118b (illustrated as parallel to the Y-axis/lateral axis of the base structure 102). In certain aspects, the cutter assembly 108 may be coupled to the second carriage 116 via a third rail (or track) such that the cutter assembly 108 can move relative to the working area 104 and the second carriage 116 along the Z-axis (*i.e.,* up and down).

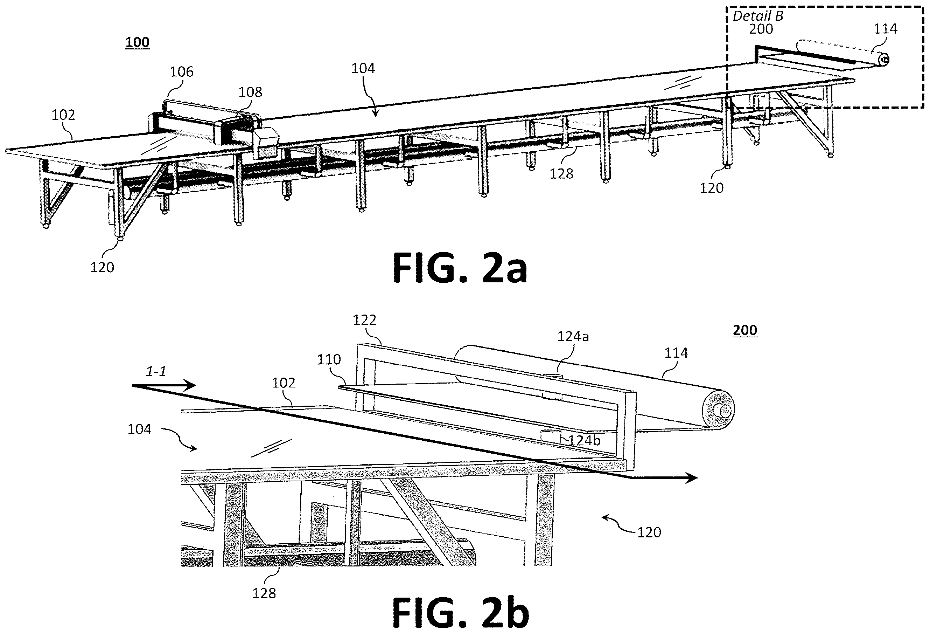

With reference to FIGS. 2A through 2C, the cutting machine 100 of FIG. 1 may be configured with one or more varieties of material-inspection systems 200 to analyze one or more qualities of the composite material sheet 110 as it is unrolled from the material spool 114.

The material-inspection system 200 may be positioned near material spool 114. The material-inspection system 200 may contain non-contact ultrasonic probes (or other probes), which are used to measure the structural integrity of the composite material sheet 110 as it is unrolled onto the working area 104. As illustrated, the material-inspection system 200 may be positioned at the back end of the base structure 102, adjacent and parallel to the material spool 114. The material-inspection system 200 serves to reduce manufacturing time by providing automated composite manufacturing and quality control. For example, the cutting machine 100 may be configured to inspect the composite material sheet 110 via the material-inspection system 200 as it is being unrolled from the material spool 114 and onto the working area 104, thereby obviating the need to wait until the composite structure is complete and the need to move the composite material sheet 110 (or the resulting composite structure) to a new table/machine exclusively for inspection.

As noted above, identifying manufacturing defects early in the manufacturing process eliminates expensive and time consuming fabrication of composite structures using defective material. Therefore, an advantage of integrating inspection with the first use of the composite material sheet 110 is that defective areas of the material roll can be identified and eliminated quickly. Further, general information of material properties immediately prior to manufacturing can be collected by the material-inspection system 200 and used to develop the database of historic material qualities. For example, the historic material qualities may provide important measurements to a tracking system for debugging parts that are found to be defective in later assembly steps. Finally, building the material-inspection system 200 into the first manufacturing process addresses the performance of early material-inspection without requiring a dedicated inspection station or inspection table. Therefore, rather than creating a unique space for the inspection, the material-inspection system 200 may be integrated directly onto the cutting machine 100 to provide space savings.

An objective of early inspection is to identify defects in the composite material sheet 110 before beginning work. In operation, these defects may be detected immediately by the material-inspection system 200 and used to prompt the operator to take action. For example, depending on the size or amount of defects, the operator may replace the material spool 114 or avoid the region affected by the defect. In certain aspects, the material-inspection system 200 may be configured to confirm that the correct type of composite material sheet 110 has been loaded for the desired composited structure. For example, the material-inspection system 200 may confirm that thickness, type of material, level of impregnation, etc. are correct (*e.g.*, within a predetermined range).

Data from the material-inspection system 200 may be collected using a tracking system and stored to a database of historic quality data. The database may then be referenced by the tracking system (or another system) and used to investigate the potential causes or sources of defects found in later inspection steps. For example, historic quality data of the composite material sheets 110 may be compared to a later-discovered defect in order to identify any correlations between the qualities of the composite material sheet 110 and the later-discovered defect. In certain aspects, for example, the historic quality data may be used to generate a look up table that can be used to identify potentially defective composite material sheets 110. In other aspects, machine-learning techniques may be used to detect and/or predict potentially defective composite material sheets 110.

The material-inspection system 200 may employ one or more non-destructive-testing techniques to inspect the composite material sheet 110 in real-time or near real-time. For example, the material-inspection system 200 may comprise an ultrasound system having one or more non-contact ultrasonic sensors (*e.g.*, a pair of ultrasonic sensors 124 comprising an ultrasonic emitter 124a and an ultrasonic receiver 124b). Non-contact ultrasonic sensors serve to simplify the inspection process and to enable the use of the sensors without needing to re-certify an existing manufacturing process, thereby allowing existing systems and processes to be quickly retrofitted. For example, ultrasound, via one or more ultrasonic sensors, may be used to verify impregnation levels of the composite material sheet 110 throughout its area. Therefore, the integration of material-inspection into the cutting table can reduce a material-handling step and save space inside the manufacturing facility.

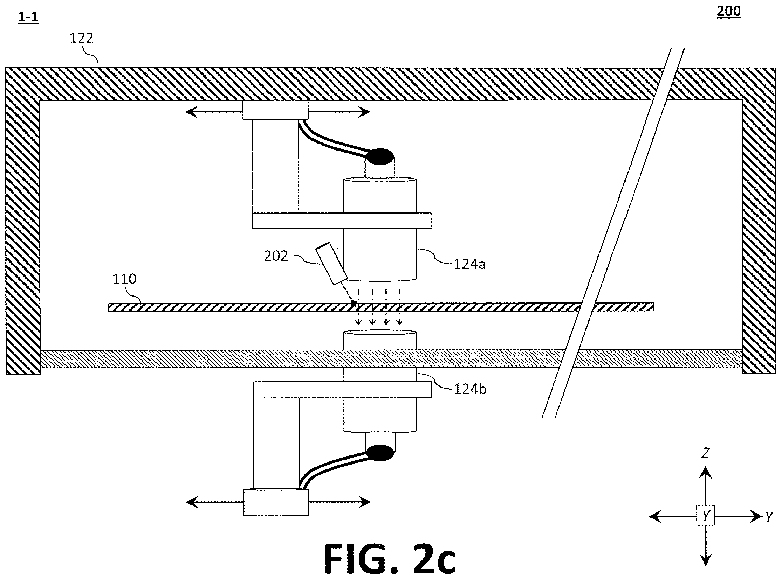

FIG. 2C illustrates an enlargement of a first example material-inspection system 200 as viewed along cut line 1-1 of FIG. 2A. As illustrated, the material-inspection system 200 comprises a pair of non-contact ultrasonic sensors 124 having an ultrasonic emitter 124a and an ultrasonic receiver 124b, where ultrasonic emitter 124a and the ultrasonic receiver 124b are positioned on opposing sides of the composite material sheet 110 that is to be inspected. Each of the ultrasonic emitter 124a and the ultrasonic receiver 124b may be positioned on a frame 122 (e.g., one or more linear rails) that is positioned adjacent and substantially parallel to the longitudinal length of the material spool 114. In other words, the material-inspection system 200 may be placed between the material spool 114 and the working area 104 and arranged to analyze the composite material sheet 110 as it unrolled onto the working area 104 of the base structure 102.

To analyze the composite material sheet 110 along its entire width (Y-axis), the ultrasonic sensors 124 may be configured to translate along the frame 122. For example, each of the ultrasonic sensors 124 may be coupled to a mount configured to travel along the frame 122 linearly along the Y-axis via a rail/track and one or more actuators. As can be appreciated, the ultrasonic emitter 124a and the ultrasonic receiver 124b preferably move in unison to maintain alignment (*e.g.*, a coaxial alignment) between the ultrasonic sensors 124. In operation, the ultrasonic sensors 124 may travel back and forth (*e.g.*, oscillate) along the Y-axis as the composite material sheet 110 is unrolled, thereby scanning the entire surface of the composite material sheet 110.

While an X-Y plotter may be used to control the location of the ultrasonic sensors 124, a challenge to this approach, however, is that the non-contact ultrasonic sensor should be above and below the material. Therefore, the lower ultrasonic sensor (ultrasonic receiver 124b) must be configured to avoid other devices positioned on the under-side of the cutting table, such the pipes of the vacuum system 128. Accordingly, as illustrated in FIG. 2B, the material-inspection system 200 may be suspended off the edge of the base structure 102 so as to avoid interference with components of the base structure 102. Alternatively, multiple sets of ultrasonic sensors 124 may be linearly and fixedly placed across the frame 122, thereby obviating the need to translate a single set of ultrasonic sensors 124 along the frame 122.

In either case, the collected data from the ultrasonic sensors 124 may be used to generate a map of the composite material sheet 110 to indicate the qualities of the various regions of the composite material sheet 110. Optionally, the material-inspection system 200 may further include a marking apparatus 202 to visually mark defective areas. For example, the marking apparatus 202 may be a dot or stripe printer, which may be a non-contact, programmable printer configured to mark dots or stripes for inspection marking, color coding, or other product identification. Alternatively, the marking apparatus 202 may be an industrial ink jet printer, which may be a non-contact, programmable printer configured to print information such as text, logos, date and time. In one aspect, the marking apparatus 202 may be coupled to one or more of the ultrasonic sensors 124 (*e.g.*, the ultrasonic emitter 124a to mark the top surface of the composite material sheet 110). For example, upon determining that a portion of the composite material sheet 110 is defective, material-inspection system 200 may, via the marking apparatus, spray paint, ink, or another marker to indicate that the region is defective. In certain aspects, the marking apparatus 202 may draw a line around the affected (defective) area. A human operator may then visually inspect the composite material sheet 110 to analyze and/or avoid the region. In another aspect, an optical system may be used to detect one or more marks from the marking apparatus 202. The ink may be visible to the human eye or invisible. When an optical system is used, for example, an invisible ink (*e.g.*, ultraviolet light (UV) ink, infrared (IR) ink, etc.) may be visible under certain lights or via certain optical systems.

In certain aspects, the material-inspection system 200 may also track/measure position and rate of the composite material sheet 110 as it is unspooled. Tracking the position of the composite material sheet 110 and/or material spool 114 enables the material-inspection system 200 to associate the ultrasound measurements with a region of the composite material sheet 110. The position and rate may be monitored using one or more optical trackers and/or a position sensor position on the material spool 114 (*e.g.*, to count the revolutions of the spool). For example, the position of the roll as the composite material sheet 110 is being pulled across the ultrasonic sensors may be determined by measuring the angular position of the roll (using an angular encoder), by measuring the front of roll as it being pulled (using a camera or laser sensor), or by using optical flow on the ultrasonic structure itself. The unrolling may also be controlled by using an additional actuator to pull the rolls across the table. For example, the material spool 114 may be automatically unrolled at a controlled rate to facilitate the inspection of the composite material sheet 110.

When it is not feasible to position an ultrasonic sensor below the composite material sheet 110, an ultrasonic sensor system may be positioned only on the top side of the composite material sheet 110, however, at the expense of lower performance. Another strategy to address this would be to embed sensors into the base structure 102. For example, a plurality of ultrasonic receivers 124b may be embedded within the base structure 102 to cover the entire working area 104 or in a single line adjacent the material spool 114.

In this architecture, the ultrasonic package is carried by the same X-Y plotter that carries the cutting head. As illustrated, rather than having a dedicated gantry system for the ultrasonic emitter 124a, the ultrasonic emitter 124a may be coupled to the cutter assembly 108. A separate X-Y plotter could be used by the ultrasonic sensors, if desired. In operation, the ultrasonic emitter 124a may scan a region of the composite material sheet 110 prior to cutting the part. This arrangement may necessitate embedding ultrasonic receivers 124b within the base structure 102 to cover all or a substantial portion of the working area 104. Alternatively, to reduce the number of the ultrasonic receivers 124b, a linear strip of embedded ultrasonic receivers 124b may be positioned adjacent the material spool 114 (as illustrated) such that the first carriage 106 travels toward the material spool 114 to perform its scanning as the composite material sheet 110 is unspooled. Once the desired amount of composite material sheet 110 is unspooled, the first carriage 106 may return to an area to perform its cutting operation.

While multiple ultrasonic receivers 124b are illustrated, a single ultrasonic receiver 124b may be embedded that moves with the ultrasonic emitter 124a. For example, the ultrasonic emitter 124a may be magnetically coupled to the embedded ultrasonic receiver 124b such that the ultrasonic receiver 124b is pulled across the underside surface of the working area 104 as the ultrasonic emitter 124a (and cutter assembly 108) is moved.

While integrating the material-inspection system 200 offers a number of advantages (e.g., saving time and space), the material-inspection system 200 may instead be offer as a separate device. Indeed, another strategy is to inspect the material roll before it is moved to the cutting machine 100. For example, a tape machine arrangement could transfer material between two rolls, with a scanner placed in between. Therefore, the composite material sheet 110 from the material spool 114 may be analyzed as they are received from the manufacturer, prior to installation on a cutting machine 100.

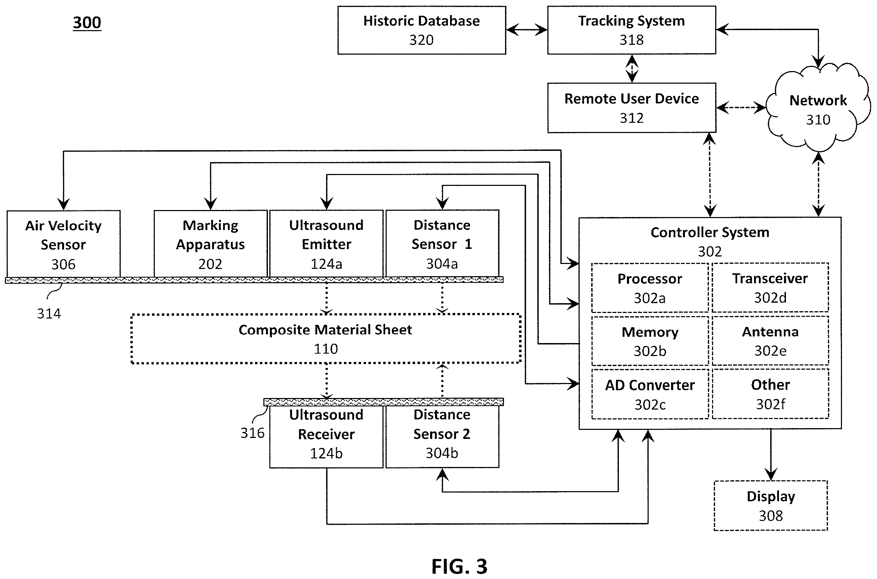

FIG. 3 illustrates a block diagram schematic of an example material-inspection system 300. As illustrated, the material-inspection system 300 comprises a controller system 302 operatively coupled to each of a display 308, a remote user device (whether directly or via a network 310), an air velocity sensor 306, a marking apparatus 202, a pair of ultrasonic sensors 124, and a pair of distance sensors 304. A first support 314 holds the ultrasonic emitter 124a, the first distance sensor 304a, the marking apparatus 202, and the air velocity sensor 306 in a first plane relative to the composite material sheet 110 while a second support 316 holds the ultrasonic receiver 124b and the second distance sensor 304b in a second plane that is substantially parallel to the first plane. The first support 314 and the second support 316 may be, for example, the upper and lower linear lateral spans of the frame 122.

As illustrated, a composite material sheet 110 is passed between each of the pairs of ultrasonic sensors 124 and distance sensors 304 such that the ultrasonic emitter 124a and the first distance sensor 304a are positioned on the top side of the composite material sheet 110 and the ultrasonic receiver 124b and the second distance sensor 304b are positioned on the underside of the composite material sheet 110. The air velocity sensor 306 may be an ultrasonic transducer operating in pulse-echo mode, while each of the first and second distance sensors 304a, 304b may be laser distance sensors. The first and second distance sensors 304a, 304b output an analog signal proportional to the distance to the composite material sheet 110, which may provide a sensing distance of 40 plus or minus 10 mm and a resolution of 2 microns.

The controller system 302 may comprise a processor 302a, a memory device 302b, an analog-to-digital converter 302c, a transceiver 302d, an antenna 302e, and, where desired, other systems 302f. The processor 302a is operatively coupled to, or integrated with, the memory device 302b. The processor 302a may be configured to perform one or more operations based at least in part on instructions (e.g., software) and one or more databases stored to the memory device 302b (e.g., hard drive, flash memory, or the like). The analog to digital convert 302c translates the sensor inputs (analog) from the various sensors into a form (digital) for processing by the processor 302a.

The controller system 302 may further include a wireless transceiver 302d coupled with an antenna 302e to communicate data between the material-inspection system 200 and a remote user device 312 (e.g., portable electronic devices, such as smartphones, tablets, and laptop computers) or other controller (e.g., an office). For example, the material-inspection system 200 may communicate data (processed data, unprocessed data, etc.) with the remote user device 312 over a network 310. In certain aspects, the wireless transceiver 302d may be configured to communicate using one or more wireless standards such as Bluetooth (e.g., shortwavelength, Ultra-High Frequency (UHF) radio waves in the Industrial, Scientific, and Medical (ISM) band from 2.4 to 2.485 GHz), near-field communication (NFC), Wi-Fi (e.g., Institute of Electrical and Electronics Engineers' (IEEE) 802.11 standards), etc. The remote user device 312 may facilitate monitoring and/or control of the material-inspection system 200. As illustrated, the remote user device 312 may be used to access the tracking system 318, either direction or via a network 310, to access a historic database 320. As explain above, the tracking system 318 may be used to collect data from the material-inspection system 200 to create a historic database 320 of historic quality data. For example, the tracking system 318 may log the measured properties of the composite material during the unrolling phase, which can be used to immediately discard defected parts, or during investigation of any future-discovered defective assembly. The tracking system 318 may be provided via a computer, which may be networked to other computers in the manufacturing facility.

The controller system 302 may further include other desired services and systems 302f. For example, the controller system 302 may be provided with internally integrated or an external transmitting transducer excitation mechanism, such as a pulser, and a receiving transducer amplification mechanism, such as a receiver amplifier. Additional techniques for determining the physical properties, texture, and microstructure of a structure are described by U.S. Patent No. 7,938,006 to Mahesh C. Bhardwaj et al. and titled "Non-Contact Ultrasound Materials Systems And Measurement Techniques."

The scanning time for a large material spool 114 is dependent on the rate of performing a single measurement, the time required to move the sensor from point to point, and the required scanning resolution. For example, the material-inspection system 200 can physically operate with a control bandwidth of 5 Hz-*i.e.,* each scan position will require 0.2 seconds to physically move the material and sensor. Additionally, the measurement will be performed at 33 Hz-*i.e.*, in 0.03 seconds. This measurement time is based on existing electromagnetic servo actuators.

Another concept is to intentionally contact sections of the composite material sheet 110 on the working area 104, which will be used in destructive material tests. In order to avoid affecting current airworthiness and customer approvals, cut paths may be planned to avoid areas where the sensor contacts the material. The benefit of this method is that it obviates the need for non-contact ultrasonic sensors, which are typically much more expensive than contact-based ultrasonic sensors. This concept would have similar scanning time performance.

In another aspect, the composite structures may be weighed after cutting to identify defects. For example, each composite structure may be weighed as it comes off the cutting machine 100. The measured weight may be compared to an expected value (*i.e.*, weight) that is calculated based on the volume and density of the composite structure. In other words, a composite structure that has an unexpected mass does not have a proper amount of pre-preg material. A benefit of this approach is that it should be inexpensive to begin implementing by hand, at a rate of approximately three measurements per minute by a single technician. Additional streamlining of the process could be developed if the method appears valuable.

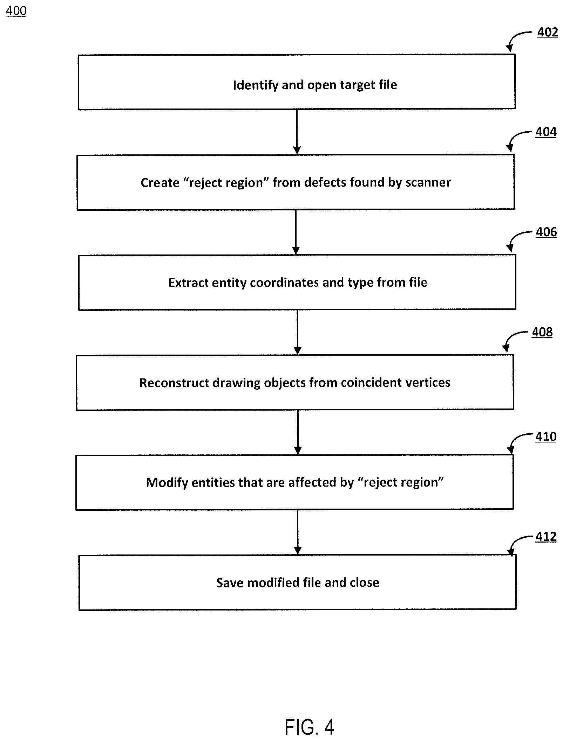

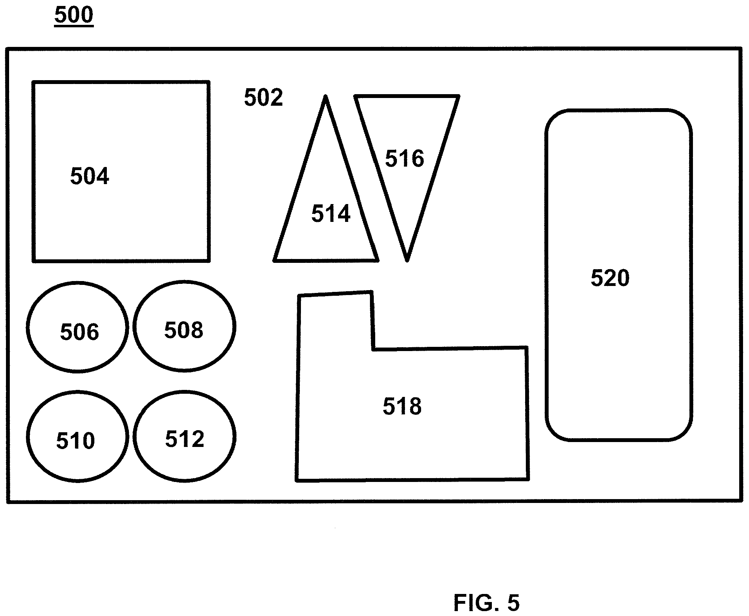

FIG. 4 illustrates a method 400 for inspecting a material and reconfiguring a preplanned cut, according to examples of the present disclosure. The method 400 can be performed by the controller system 302 of FIG. 3. FIG. 4 will be discussed in conjunction with FIGS. 5-9. FIG. 5 illustrates an initial cutting template 500 before the pre-preg material has been scanned for defects, according to examples of the present disclosure. The method 400 begins by identify and opening, at 402, a target file. For example, the desired cut path can be built in a language or file structure that is not proprietary or encrypted. By way of a non-limiting example, a common language can be a 2D drawing exchange format (DXF), which is an open and interoperable language for commercial computer-aided design (CAD). The 2d DXF file can then be analyzed to identify one or more entities from the structure to be cut, such as recognized shapes and embedded drawing units. Turning to FIG. 5, the cutting template 500 comprises nine shapes to be cut from a pre-preg material 502. The nine shapes include a square 504, a first circle 506, a second circle 508, a third circle 510, a fourth circle 512, a first triangle 514, a second triangle 516, a L-shape 518, and a rounded rectangle 520. This is merely a non-limiting example, the pre-preg material 502 can be cut with any type or number of shapes or patterns.

The method 400 continues by creating, at 404, a "reject region" from defects found by a scanner. As discussed above, the scanner, such as the ultrasonic emitter 124a, may scan a region of the composite material sheet 110 prior to cutting the part. The scanner, such as the ultrasonic emitter 124a, can be arranged in various configurations as discussed above. In some examples, alternatively and/or additionally another type of nondestructive and/or destructive testing technique can be used as is known in the art. Also, the scanner can employ contact and/or non-contact testing techniques. For example, the scanner can employ contact testing techniques including eddy current testing, magnetic testing, penetrant testing, or liquid penetrant testing. The scanner can also employ non-contact testing techniques including through transmission ultrasonic, radiography, thermography, infrared, holography, shearography, or visual inspection.

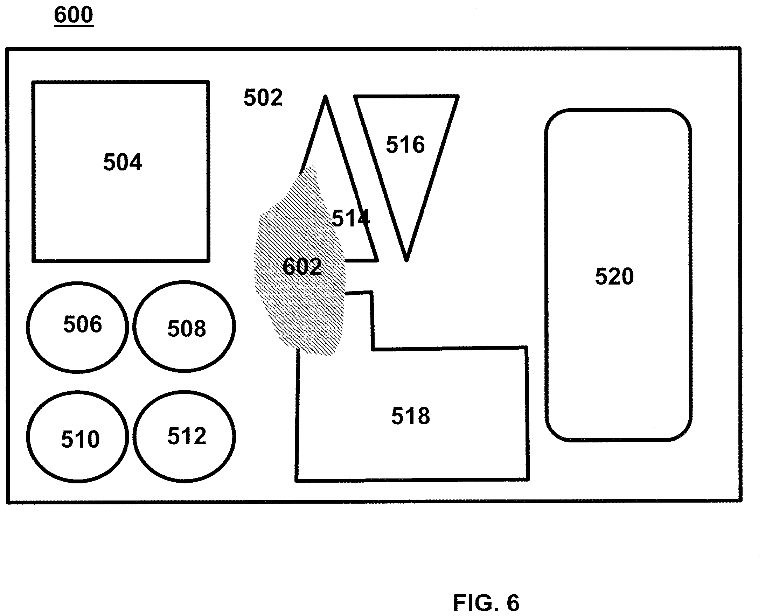

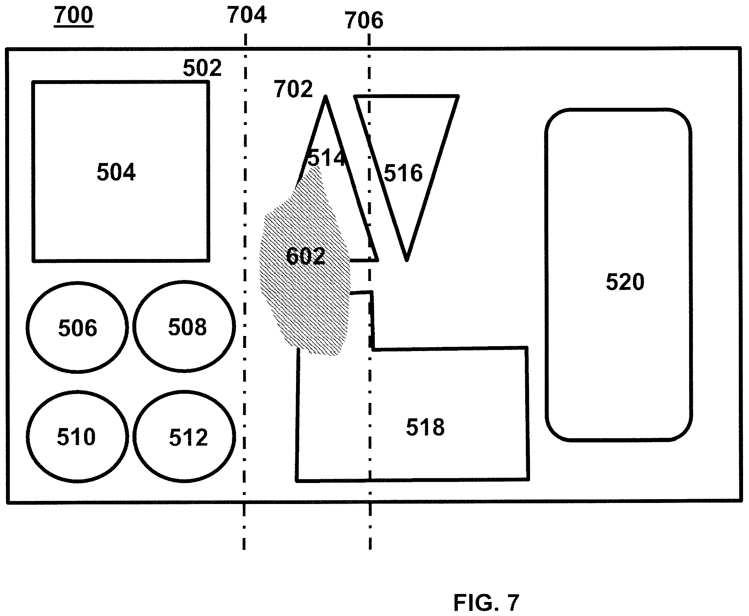

Once the scanner detects one or more regions of the pre-preg material that contain a defect, a reject region can be created so that the identified defect regions are not included in the finished material. Turning to FIG. 6, a defect 602 is detected in the pre-preg material 502 of FIG. 5 by the scanner. Based on the defect 602 that is detected, a reject region 702 is identified that encompasses the defect 602 bounded on side by a first boundary 704 and a second boundary 706, as shown in FIG. 7. In the example of FIG. 7, the reject region 602 directly impacts the first triangle 514, the second triangle 516, and the L-shape shape 518 because at least a portion of these shapes lie in the reject region 702. Also, the shape(s) that lie to the right, e.g., downstream, of the reject region 518, e.g., the rounded rectangle 520, is also indirectly impacted. As such, to avoid those shapes impacted by the reject region 702, the planned cuts for the first triangle 514, the second triangle 516, the L-shape 518, and the rounded rectangle 520 are modified in the DXF file by shifting those object downstream beyond the second boundary 706 of the reject region 702.

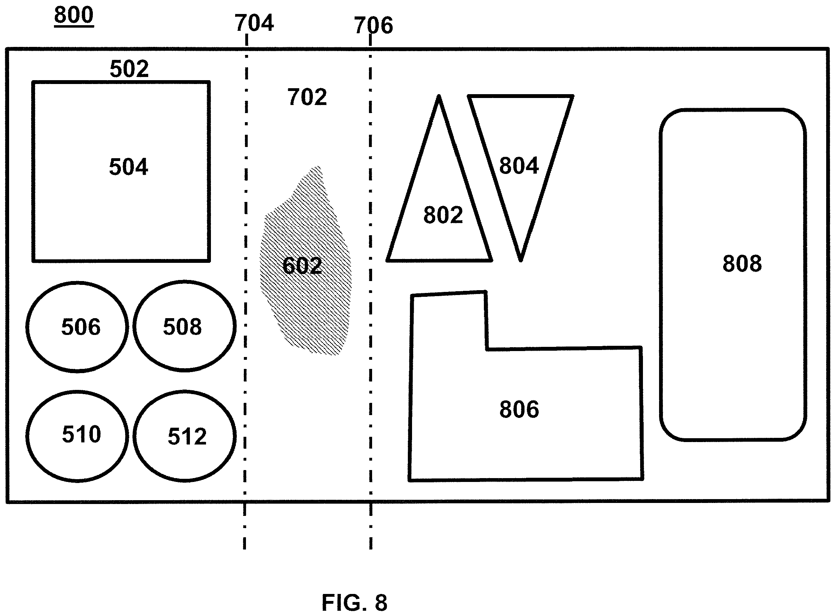

The method 400 continues by extracting, at 406, entity coordinates and type from file. Turning to FIG. 8, coordinates defining the reject region 702 are identified in the DXF file. The first boundary 704 and the second boundary 706 are established around the defect 702 that is detected to prevent cutting to occur in this region. As shown in FIG. 8, the first boundary 704 and the second boundary 706 are established around the defect 602 extend the full width of the pre-preg material 502. Once the first boundary 704 and the second boundary 706 are determined, the shapes effected by the defect region 702 are modified to be moved downstream. As such, the first triangle 514 becomes a first triangle 802, the second triangle 516 becomes a second triangle 804, the L-shape 518 becomes a L-shape 806, and the rounded rectangle 520 becomes a rounded rectangle 808 downstream of the second boundary 706. By establishing a boundary that extends to the full width of the pre-preg material 502, this reduces the likelihood that other patterns to be cur are not affected by the defect 602. Also, the patterns that are moved can retain the same orientation established in the original DXF file.

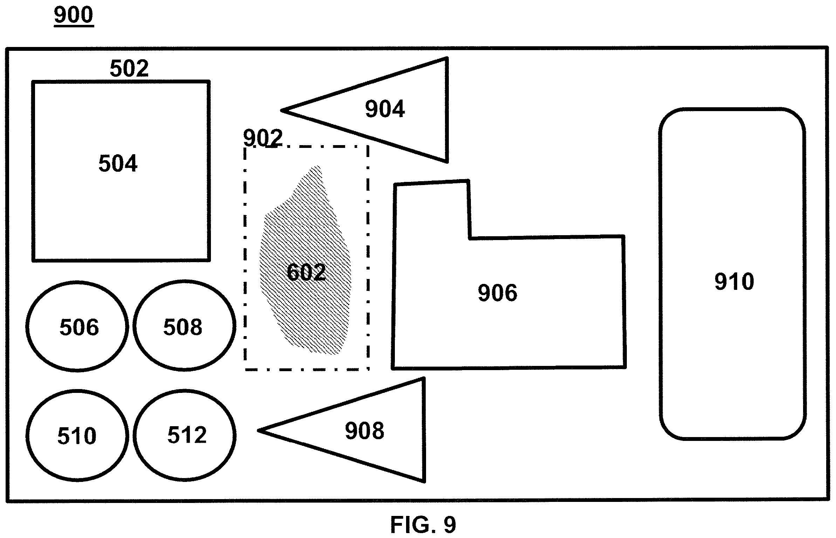

In some examples, it may be desirable to minimize the amount of the pre-preg material 502 that is included in a reject region and that is not available for cutting. FIG. 9 illustrates a template 900 where the defect area is minimized. In this example, a reject region 902 around the defect 602 is identified that just encompasses the defect 602, but does not extend to the full width of the pre-preg material 502. Because areas around the reject region 902 are available for use in this example, the remaining shapes can be reoriented from the initial template to make use of this newly available space. As shown in FIG. 9, a first triangle 904 (original first triangle 515) and a second triangle 908 (original triangle 516) are reoriented to have portions above and below the reject region 902, respectively. A L-shape 906 (original L-shape 518) and a rounded rectangle 910 (original rounded rectangle 520) are also reoriented in the pre-preg material 502.

The method 400 continues by reconstructing, at 408, drawing objects. Retuning to FIG. 8, the planned cuts for the first triangle 802, the second triangle 804, the L-shape 806, and the rounded rectangle 808 are shifted to the right (e.g., downstream of the scanner) based on the boundaries 704, 706, of the reject region 702. In some examples, the first triangle 802, the second triangle 804, the L-shape 806, and the rounded rectangle 808 are all shifted to the right by the same amount to maintain the original layout in the DXF file. In the examples where the reject region 902 as shown in FIG. 9 is minimized, the shapes can be reoriented to maximize the usage of the pre-preg material 502 while still avoiding the defect 602.

The method 400 continues by saving, at 410, the modified file. Once the revised layout is approved, the revised layout can be saved in a modified DXF file.

As a system this invention scans incoming material for defects and keeps track of regions that may impact final part quality. The software described here uses the scanner information to create a keep-out area or "reject region" that parts should not be cut from. It then compares the extracted CAD file information to the keep-out area and alters the CAD file to prevent overlaps. The resulting file is exported to a CNC machine that realizes the CAD file and leaves the defective material intact for later inspection.

## Claims

1. A material inspection system (300) for planning a cutting pattern for a composite material sheet based on a detected defect, the material inspection system comprising:

   one or more sensors (124a, 124b, 304a, 304b, 306) to measure one or more material properties of the composite material sheet (110);
   a cutter assembly (100, 200) having a cutter tool (108) to cut the composite material sheet (110);
   a control system (302) comprising a hardware processor (302a) and a non-transitory storage medium (302b) comprising instructions, that when executed by the hardware processor (302a), configured to:

      obtain an initial cutting pattern (500) for the composite material sheet (110, 502), wherein the initial cutting pattern comprises one or more shapes to be cut (504, 506, 508, 510, 512, 514, 516, 518, 520);
      determine a defect (602) in the composite material sheet (110, 502) based on the measured one or more material properties of the composite material sheet (110, 502);
      determine a reject region (702) in the composite material sheet (110, 502) around the defect (602);
      shift one or more shapes (802, 804, 806, 808) of the one or more shapes away from the reject region (702); and
      provide a revised cutting pattern (800) based on the one or more shapes (802, 804, 806, 808) that are shifted to be cut by the cutter assembly (100, 200);

   wherein the control system (302) is configured to determine the defect (602) such that the reject region (902) encompasses the defect (602) but does not extend to a full width of the composite material sheet (110, 502), and

wherein the control system (302) is configured to shift the one or more shapes (802, 804, 806, 808) such that the one or more shapes that are shifted (904, 906, 908, 910) are reoriented to maximize usage of the composite material sheet (110, 502) in the revised cutting pattern while avoiding the defect (602).

2. The material inspection system according to claim 1, wherein the cutter assembly (100, 200) is configured to move relative to a working area (104) via a two-axis gantry (106, 116).

3. The material inspection system according to claim 1 or 2, wherein the one or more sensors (124a, 124b, 304a, 304b, 306) comprise one or more non-contact sensors.

4. The material inspection system according to claim 3, wherein the one or more non-contact sensors comprise a transmission ultrasonic sensor, a radiography sensor, a thermography sensor, an infrared sensor, a holography sensor, or a shearography sensor.

5. The material inspection system according to any of claims 1-4, wherein the one or more sensors (124a, 124b, 304a, 304b, 306) comprise one or more of contact sensors.

6. The material inspection system according to claim 5, wherein the one or more contact sensors comprise an eddy current sensor, a magnetic sensor, a penetrant testing sensor, or a liquid penetrant testing sensor.

7. The material inspection system according to any of claims 3-6, wherein the one or more non-contact sensors comprises an ultrasonic emitter (124a) and an ultrasonic receiver (124b).

8. The material inspection system according to any of claims 1-7, wherein the composite material sheet comprises pre-impregnated composite fibers.

9. The material inspection system according to claim 1 or 8, wherein the material inspection system comprises a pair of non-contact ultrasonic sensors having an ultrasonic emitter (124a) and an ultrasonic receiver (124b), wherein the ultrasonic emitter (124a) and the ultrasonic receiver (124b) are positioned on opposing sides of the composite material sheet (110) that is to be inspected.

10. The material inspection system according to claim 9, wherein each of the ultrasonic emitter (124a) and the ultrasonic receiver (124b) is coupled to a mount configured to travel along a frame (122) linearly along a width of the composite material sheet via a rail and one or more actuators.

11. The material inspection system according to any of claims 1 to 10, further comprising a database of historic material qualities that stores the measured one or more material properties for debugging parts that are found to be defective in later assembly steps.

12. A computer-implemented method for material inspections, the computer-implemented method comprising:

obtaining an initial cutting pattern (500) for a composite material sheet (110, 502), wherein the initial cutting pattern comprises one or more shapes to be cut (504, 506, 508, 510, 512, 514, 516, 518, 520);
determining a defect (602) in the composite material sheet (110, 502) based on the measured one or more material properties of the composite material sheet (110, 502);
determining, by a hardware processor (302a), a reject region (702) in the composite material sheet (110, 502) around the defect (602);
shifting one or more shapes (802, 804, 806, 808) of the one or more shapes away from the reject region; and
providing a revised cutting pattern (800) based on the shifting;
wherein the reject region (902) encompasses the defect (602) but does not extend to a full width of the composite material sheet (110, 502); and
wherein the one or more shapes that are shifted (904, 906, 908, 910) are reoriented to maximize usage of the composite material sheet (110, 502) in the revised cutting pattern while avoiding the defect (602).

13. The computer-implemented method according to claim 12, wherein the one or more sensors (124a, 124b, 304a, 304b, 306) comprise one or more non-contact sensors.

14. The computer-implemented method according to claim 13, wherein the one or more sensors (124a, 124b, 304a, 304b, 306) comprise one or more contact sensors.

15. The computer-implemented method according to claim 13 or 14, wherein the one or more non-contact sensors comprises an ultrasonic emitter (124a) and an ultrasonic receiver (124b).

**Patentansprüche**

1.  Materialinspektionssystem (300) zum Planen eines Schneidmusters für eine Verbundwerkstoffmaterialbahn basierend auf einem erkannten Fehler, wobei das Materialinspektionssystem aufweist:

    einen oder mehrere Sensoren (124a, 124b, 304a, 304b, 306) zum Messen einer oder mehrerer Materialeigenschaften der Verbundwerkstoffmaterialbahn (110);
    eine Schneidanordnung (100, 200) mit einem Schneidwerkzeug (108) zum Schneiden der Verbundwerkstoffmaterialbahn (110);
    ein Steuersystem (302), das einen Hardwareprozessor (302a) und ein nichtflüchtiges Speichermedium (302b) aufweist, das Anweisungen aufweist, die, wenn sie von dem Hardwareprozessor (302a) ausgeführt werden, ausgebildet sind zum:

    Erhalten eines anfänglichen Schnittmusters (500) für die Verbundwerkstoffmaterialbahn (110, 502), wobei das anfängliche Schnittmuster eine oder mehrere zu schneidende Formen (504, 506, 508, 510, 512, 514, 516, 518, 520) aufweist;
    Bestimmen eines Fehlers (602) in der Verbundwerkstoffmaterialbahn (110, 502) basierend auf der gemessenen einen oder mehreren Materialeigenschaften der Verbundwerkstoffmaterialbahn (110, 502);
    Bestimmen eines Ausschussbereichs (702) in der Verbundwerkstoffmaterialbahn (110, 502) um den Fehler (602) herum;
    Verschieben einer oder mehrerer Formen (802, 804, 806, 808) der einen oder mehreren Formen weg von dem Ausschussbereich (702); und
    Bereitstellen eines überarbeiteten Schneidmusters (800) basierend auf der einen oder den mehreren Formen (802, 804, 806, 808), die verschoben sind, um von der Schneidanordnung (100, 200) geschnitten zu werden;

    wobei das Steuersystem (302) derart ausgebildet ist, dass es den Fehler (602) so bestimmt, dass der Ausschussbereich (902) den Fehler (602) einschließt, sich aber nicht über die gesamte Breite der Verbundwerkstoffmaterialbahn (110, 502) erstreckt, und
    wobei das Steuersystem (302) derart ausgebildet ist, dass es die eine oder die mehreren Formen (802, 804, 806, 808) so verschiebt, dass die eine oder die mehreren Formen, die verschoben werden (904, 906, 908, 910), neu ausgerichtet werden, um die Nutzung der Verbundwerkstoffmaterialbahn (110, 502) in dem überarbeiteten Schneidmuster zu maximieren, während der Fehler (602) vermieden wird.

2.  Materialinspektionssystem nach Anspruch 1, wobei die Schneidevorrichtung (100, 200) derart ausgebildet ist, dass sie sich über ein zweiachsiges Portal (106, 116) relativ zu einem Arbeitsbereich (104) bewegt.

3.  Materialinspektionssystem nach Anspruch 1 oder 2, wobei der eine oder die mehreren Sensoren (124a, 124b, 304a, 304b, 306) einen oder mehrere berührungslose Sensoren aufweisen.

4.  Materialinspektionssystem nach Anspruch 3, wobei der eine oder die mehreren berührungslosen Sensoren einen Transmissions-Ultraschallsensor, einen Radiographiesensor, einen Thermographiesensor, einen Infrarotsensor, einen Holographiesensor oder einen Shearographiesensor aufweisen.

5.  Materialinspektionssystem nach einem der Ansprüche 1-4, wobei der eine oder die mehreren Sensoren (124a, 124b, 304a, 304b, 306) einen oder mehrere Kontaktsensoren aufweisen.

6.  Materialinspektionssystem nach Anspruch 5, wobei der eine oder die mehreren Kontaktsensoren einen Wirbelstromsensor, einen Magnetsensor, einen Eindringprüfsensor oder einen Flüssigkeitseindringprüfsensor aufweisen.

7.  Materialinspektionssystem nach einem der Ansprüche 3-6, wobei der eine oder die mehreren berührungslosen Sensoren einen Ultraschallsender (124a) und einen Ultraschallempfänger (124b) aufweisen.

8.  Materialinspektionssystem nach einem der Ansprüche 1-7, wobei die Verbundwerkstoffmaterialbahn vorimprägnierte Verbundwerkstofffasern aufweist.

9.  Materialinspektionssystem nach Anspruch 1 oder 8, wobei das Materialprüfsystem ein Paar berührungsloser Ultraschallsensoren mit einem Ultraschallsender (124a) und einem Ultraschallempfänger (124b) aufweist, wobei der Ultraschallsender (124a) und der Ultraschallempfänger (124b) auf entgegengesetzten Seiten der zu prüfenden Verbundwerkstoffmaterialbahn (110) angeordnet sind.

10. Materialinspektionssystem nach Anspruch 9, wobei sowohl der Ultraschallsender (124a) als auch der Ultraschallempfänger (124b) mit einer Halterung koppeln, die so ausgebildet ist, dass sie sich entlang eines Rahmens (122) linear entlang einer Breite der Verbundwerkstoffmaterialbahn über eine Schiene und einen oder mehrere Aktuatoren bewegt.

11. Materialinspektionssystem nach einem der Ansprüche 1 bis 10, des Weiteren mit einer Datenbank mit historischen Materialqualitäten, in der die gemessene(n) eine oder mehrere Materialeigenschaft(en) gespeichert sind, um Teile, die sich in späteren Montageschritten als fehlerhaft erweisen, zu berichtigen.

12. Computerimplementiertes Verfahren für Materialinspektionen, wobei das computerimplementierte Verfahren aufweist:

Erhalten eines anfänglichen Schneidmusters (500) für eine Verbundwerkstoffmaterialbahn (110, 502), wobei das anfängliche Schneidmuster eine oder mehrere zu schneidende Formen (504, 506, 508, 510, 512, 514, 516, 518, 520) aufweist;

Bestimmen eines Fehlers (602) in der Verbundwerkstoffmaterialbahn (110, 502) basierend auf der gemessenen einen oder mehreren Materialeigenschaften der Verbundwerkstoffmaterialbahn (110, 502);

Bestimmen eines Bereichs (702) in der Verbundwerkstoffmaterialbahn (110, 502) um den Fehler (602) herum durch einen Hardware-Prozessor (302a);

Verschieben einer oder mehrerer Formen (802, 804, 806, 808) der einen oder mehreren Formen weg von dem Ausschussbereich; und

Bereitstellen eines überarbeiteten Schneidmusters (800) basierend auf der Verschiebung;

wobei der Ausschussbereich (902) den Fehler (602) einschließt, sich aber nicht über die gesamte Breite der Verbundwerkstoffmaterialbahn (110, 502) erstreckt; und

wobei die eine oder die mehreren Formen, die verschoben werden (904, 906, 908, 910), neu ausgerichtet werden, um die Nutzung des Verbundwerkstoffmaterialbahn (110, 502) in dem überarbeiteten Schneidmuster zu maximieren, während der Fehler (602) vermieden wird.

13. Computerimplementiertes Verfahren nach Anspruch 12, wobei der eine oder die mehreren Sensoren (124a, 124b, 304a, 304b, 306) einen oder mehrere berührungslose Sensoren aufweisen.

14. Computerimplementiertes Verfahren nach Anspruch 13, wobei der eine oder die mehreren Sensoren (124a, 124b, 304a, 304b, 306) einen oder mehrere Kontaktsensoren aufweisen.

15. Computerimplementiertes Verfahren nach Anspruch 13 oder 14, wobei der eine oder die mehreren berührungslosen Sensoren einen Ultraschallsender (124a) und einen Ultraschallempfänger (124b) aufweisen.

## Revendications

1. Système d'inspection de matériau (300) permettant de planifier un motif de découpe pour une feuille de matériau composite sur la base d'un défaut détecté, le système d'inspection de matériau comprenant :

un ou plusieurs capteurs (124a, 124b, 304a, 304b, 306) pour mesurer une ou plusieurs propriétés matérielles de la feuille de matériau composite (110) ;

un ensemble de découpe (100, 200) présentant un outil de découpe (108) pour découper la feuille de matériau composite ;

un système de commande (302) comprenant un processeur matériel (302a) et un support de stockage non transitoire (302b) comprenant des instructions qui, lorsqu'elles sont exécutées par le processeur matériel (302a), sont configurées pour :

obtenir un motif de découpe initial (500) pour la feuille de matériau composite (110, 502), le motif de découpe initial comprenant une ou plusieurs formes à découper (504, 506, 508, 510, 512, 514, 516, 518, 520) ;

déterminer un défaut (602) dans la feuille de matériau composite (110, 502) sur la base de ladite une ou des plusieurs propriétés matérielles mesurées de la feuille de matériau composite (110, 502) ;

déterminer une région de rejet (702) dans la feuille de matériau composite (110, 502) autour du défaut (602) ;

décaler une ou plusieurs formes (802, 804, 806, 808) de ladite une ou des plusieurs formes en les éloignant de la région de rejet (702) ; et

fournir un motif de découpe (800) remanié sur la base de ladite une ou des plusieurs formes (802, 804, 806, 808) qui sont décalées pour être découpées par l'ensemble de découpe (100, 200) ;

dans lequel le système de commande (302) est configuré pour déterminer le défaut (602) de sorte que la région de rejet (902) englobe le défaut (602) mais ne s'étend pas sur toute la largeur de la feuille de matériau composite (110, 502), et dans lequel le système de commande (302) est configuré pour décaler ladite une ou les plusieurs formes (802, 804, 806, 808) de sorte que ladite une ou les plusieurs formes qui sont décalées (904, 906, 908, 910) sont réorientées pour maximiser l'utilisation de la feuille de matériau composite (110, 502) dans le motif de découpe remanié tout en évitant le défaut (602).

2. Système d'inspection de matériau selon la revendication 1, dans lequel l'ensemble de découpe (100, 200) est configuré pour se déplacer par rapport à une zone de travail (104) par l'intermédiaire d'un portique sur deux axes (106, 116).

3. Système d'inspection de matériau selon la revendication 1 ou 2, dans lequel ledit un ou les plusieurs capteurs (124a, 124b, 304a, 304b, 306) comprennent un ou plusieurs capteurs sans contact.

4. Système d'inspection de matériau selon la revendication 3, dans lequel ledit un ou les plusieurs capteurs sans contact comprennent un capteur à ultrasons à transmission, un capteur radiographique, un capteur thermographique, un capteur infrarouge, un capteur holographique ou un capteur de mesure de cisaillement.

5. Système d'inspection de matériau selon l'une quelconque des revendications 1 à 4, dans lequel ledit un ou les plusieurs capteurs (124a, 124b, 304a, 304b, 306) comprennent un ou plusieurs capteurs de contact.

6. Système d'inspection de matériau selon la revendication 5, dans lequel ledit un ou les plusieurs capteurs de contact comprennent un capteur de courants de Foucault, un capteur magnétique, un capteur d'essai par pénétration ou un capteur de ressuage.

7. Système d'inspection de matériau selon l'une quelconque des revendications 3 à 6, dans lequel ledit un ou les plusieurs capteurs sans contact comprennent un émetteur à ultrasons (124a) et un récepteur à ultrasons (124b).

8. Système d'inspection de matériau selon l'une quelconque des revendications 1 à 7, dans lequel la feuille de matériau composite comprend des fibres composites préimpregnées.

9. Système d'inspection de matériau selon la revendication 1 ou 8, dans lequel le système d'inspection de matériau comprend une paire de capteurs à ultrasons sans contact présentant un émetteur à ultrasons (124a) et un récepteur à ultrasons (124b), dans lequel l'émetteur à ultrasons (124a) et le récepteur à ultrasons (124b) sont positionnés sur des côtés opposés de la feuille de matériau composite (110) à inspecter.

10. Système d'inspection de matériau selon la revendication 9, dans lequel chacun de l'émetteur à ultrasons (124a) et du récepteur à ultrasons (124b) est couplé à un bâti configuré pour se déplacer le long d'un cadre (122) de manière linéaire le long d'une largeur de la feuille de matériau composite par l'intermédiaire d'un rail et d'un ou de plusieurs actionneurs.

11. Système d'inspection de matériau selon l'une quelconque des revendications 1 à 10, comprenant en outre une base de données de qualités de matériau historiques qui stocke ladite une ou les plusieurs propriétés matérielles mesurées pour localiser des pièces identifiées comme défectueuses dans des étapes d'assemblage ultérieures.

12. Procédé mis en oeuvre par ordinateur pour des inspections de matériau, le procédé mis en oeuvre par ordinateur comprenant les étapes consistant à :

obtenir un motif de découpe initial (500) pour une feuille de matériau composite (110, 502), dans lequel le motif de découpe initial comprend une ou plusieurs formes à découper (504, 506, 508, 510, 512, 514, 516, 518, 520) ;
déterminer un défaut (602) dans la feuille de matériau composite (110, 502) sur la base de ladite une ou des plusieurs propriétés matérielles mesurées de la feuille de matériau composite (110, 502) ;
déterminer, par un processeur matériel (302a), une région de rejet (702) dans la feuille de matériau composite (110, 502) autour du défaut (602) ;
décaler une ou plusieurs formes (802, 804, 806, 808) de ladite une ou des plusieurs formes en les éloignant de la région de rejet ; et
fournir un motif de découpe remanié (800) sur la base du décalage ;
dans lequel la région de rejet (902) englobe le défaut (602) mais ne s'étend pas sur toute la largeur de la feuille de matériau composite (110, 502) ; et
dans lequel ladite une ou les plusieurs formes qui sont décalées (904, 906, 908, 910) sont réorientées pour maximiser l'utilisation de la feuille de matériau composite (110, 502) dans le motif de découpe remanié tout en évitant le défaut (602).

13. Procédé mis en oeuvre par ordinateur selon la revendication 12, dans lequel ledit un ou les plusieurs capteurs (124a, 124b, 304a, 304b, 306) comprennent un ou plusieurs capteurs sans contact.

14. Procédé mis en oeuvre par ordinateur selon la revendication 13, dans lequel ledit un ou les plusieurs capteurs (124a, 124b, 304a, 304b, 306) comprennent un ou plusieurs capteurs de contact.

**15.** Procédé mis en oeuvre par ordinateur selon la revendication 13 ou 14, dans lequel ledit un ou les plusieurs capteurs sans contact comprennent un émetteur à ultrasons (124a) et un récepteur à ultrasons (124b).

**FIG. 1**

FIG. 2a

FIG. 2b

**FIG. 2c**

FIG. 3

EP 3 598 123 B1

400

402

Identify and open target file

404

Create "reject region" from defects found by scanner

406

Extract entity coordinates and type from file

408

Reconstruct drawing objects from coincident vertices

410

Modify entities that are affected by "reject region"

412

Save modified file and close

FIG. 4

500

502

504

506

508

510

512

514

516

518

520

FIG. 5

FIG. 6

FIG. 7

FIG. 8

900

502

504

904

902

602

906

910

506

508

510

512

908

FIG. 9

EP 3 598 123 B1

## REFERENCES CITED IN THE DESCRIPTION

**Patent documents cited in the description**

- US 8583271 B2
- US 4725961 A
- US 6520057 B1
- US 7938006 B, Mahesh C. Bhardwaj